# EUROPEAN PATENT SPECIFICATION

(11) **EP 2 971 210 B1**
(45) Date of publication and mention of the grant of the patent: **19.12.2018**
(21) Application number: 14764684.8
(22) Date of filing: 15.01.2014
(51) Int. Cl.: F16C 33/44, F16C 33/56, F16C 33/62, C21D 9/36, C21D 6/00, C21D 9/40, C23C 8/22, C23C 8/26, C22C 38/02, C22C 38/22, C22C 38/24, C22C 38/30, C22C 38/38, C22C 38/46, C22C 38/48, C22C 38/50, F16C 19/02, F16C 33/32, C23C 8/32, C23C 8/38

(54) **COMPONENT CONFIGURED FROM MARTENSITIC STAINLESS STEEL**
BAUTEIL AUS MARTENSITISCHEM ROSTFREIEM STAHL
COMPOSANT CONFIGURÉ À PARTIR D'ACIER INOXYDABLE MARTENSITIQUE

(30) Priority: 15.03.2013 US 201361788690 P
(43) Date of publication of application: 20.01.2016
(73) Proprietor: United Technologies Corporation, Farmington, CT 06032 (US)
(72) Inventor: CHIN, Herbert A., Charlotte, North Carolina 28277 (US); OGDEN, William P., Glastonbury, Connecticut 06033 (US); HALUCK, David A., Stuart, Florida 34997 (US); SPITZER, Ronald F., Charlotte, North Carolina 28269 (US)
(74) Representative: Dehns
(86) International application number: PCT/US2014/011680
(87) International publication number: WO 2014/143396

(56) References cited:
- WO-A1-2012/166851
- WO-A2-01/68933
- JP-A- 2000 226 641
- JP-A- 2003 222 138
- US-A- 5 861 067
- US-A1- 2002 160 223
- US-A1- 2011 108 164
- US-A1- 2013 016 937
- US-A1- 2013 032 251
- US-B1- 6 443 624

## Description

Applicant hereby claims priority to U.S. Patent Application No. 61/788,690 filed March 15,2013.

This invention was made with government support under Contract No. FA8650-09-D-2923 0004 awarded by the United States Air Force. The government may have certain rights in the invention.

### BACKGROUND OF THE INVENTION

### 1. Technical Field

This disclosure relates generally to martensitic stainless steel and, more particularly, to a martensitic stainless steel component configured for use in a mechanical system such as a turbine engine.

### 2. Background Information

A component of a bearing for a turbine engine may be constructed from martensite stainless steel. To increase surface hardness of the bearing component, the martensite stainless steel may be carburized. Carbon, for example, may be diffused into a surface of the bearing component. The carbon, however, may form relatively large carbide precipitates along grain boundaries, which may decrease the strength of stainless steel. In addition, the stainless steel may have a relatively coarse grain size, which may further decrease the strength and ductility of the stainless steel. Such a reduction in strength and ductility may increase the bearing component's susceptibility to spallation. US 2011/108164 describes a method for thermal mechanical processing of a martensitic stainless steel. WO 2012/166851 discloses a method for producing s a case-hardened martensitic stainless steel article. US 6443624 discloses an angular contact ball bearing with races formed from a case-carburised or cabonitrided steel that withstands high forces and high temperatures. US 5,861,067 describes a machine component which is formed from a high alloy steel and has, along a surface where the component is subjected to cyclic loading, a glaze in which the steel has a refined microstructure that resists spalling.

### SUMMARY OF THE DISCLOSURE

According to an aspect of the invention, a rolling element bearing is provided that includes a plurality of bearing components. The bearing components include one or more rolling elements, an inner ring and an outer ring. A first of the bearing components includes martensitic stainless steel configured with a core and a hardened case wherein the first of the bearing components is one of the one or more rolling elements, the inner ring or the outer ring. The martensitic stainless steel of the core includes 8-18% by weight chromium. The martensitic stainless steel of the hardened case has a grain size that is substantially equal to or finer than ASTM grain size #7. The martensitic stainless steel of the hardened case includes approximately 6% by weight or more chromium. The martensitic stainless steel of the hardened case also includes carbon, where molecules that include the carbon are substantially uniformly dispersed within the hardened case. The martensitic stainless steel of the hardened case comprises between two and fifteen percent by volume retained austenite and between 0.8 and 4 percent by weight of the carbon. The molecules that include carbon are carbonitrides.

According to another aspect of the invention, another rolling element bearing is provided that includes a plurality of bearing components. The bearing components include one or more rolling elements, an inner ring and an outer ring. A first of the bearing components include martensitic stainless steel, which includes iron, chromium, cobalt, vanadium, molybdenum, nickel, manganese, silicon and carbon. A core of the martensitic stainless steel includes 8-18% by weight of the chromium. A case of the martensitic stainless steel has a grain size that is substantially equal to or finer than ASTM grain size #7. The case includes approximately 6% by weight or more of the chromium, and between approximately 0.8 and approximately 4 percent by weight of the carbon. Molecules including carbon are substantially uniformly dispersed within the case and are carbonitrides.

The martensitic stainless steel may include one or more of the following: nitrogen, manganese, nickel, molybdenum, tungsten and silicon.

The hardened case may have a depth that extends from a surface of the first of the bearing components towards the core. The depth may be substantially equal to between approximately 0.01 and approximately 0.06 inches.

The hardened case may have a hardness that is substantially equal to or greater than about 58 RC. The hardened case may also or alternatively have a substantially uniform hardness. The hardened case may also or alternatively have a compressive stress that is substantially equal to or greater than approximately 5 ksi.

The core may have a fracture toughness that is substantially equal to or greater than approximately 25 ksi square root inch.

The grain size may be substantially equal to or finer than ASTM grain size #9.

A volume fraction of the carbo-nitrides within the hardened case may be substantially equal to or greater than about 5 percent by volume. The carbo-nitrides may also or alternatively have a moderate or finer size; e.g., between about 0.01 microns and about 100 microns.

The first of the bearing components may be configured as or otherwise include one of the rolling elements. Alternatively, the first of the bearing components may be configured as or otherwise include the inner ring or the outer ring. In addition, one or more of the rolling elements may each be configured from ceramic.

The foregoing features and the operation of the invention will become more apparent in light of the following description and the accompanying drawings.

### BRIEF DESCRIPTION OF THE DRAWINGS

FIG. 1 is a side cutaway illustration of a geared turbine engine;
FIG. 2 is a side sectional illustration of a bearing for the turbine engine of FIG. 1;
FIG. 3 is a sectional illustration of an enlarged portion of one of the components of the bearing of FIG. 2;
FIG. 4 is a graphical depiction of hardness of the bearing component of FIG. 3 as a function of depth below a surface of the bearing component;
FIG. 5 is a graphical depiction of residual stress of the bearing component of FIG. 3 as a function of depth below a surface of the bearing component;
FIG. 6 is a pictorial sectional illustration of an enlarged portion of a case of the bearing component of FIG. 3;
FIG. 7 is a flow diagram of a process for forming a component using martensitic stainless steel; and
FIG. 8 is a graphical depiction of reduction of grain size of martensitic stainless steel as a function of temperature during thermo-mechanical processing.

### DETAILED DESCRIPTION OF THE INVENTION

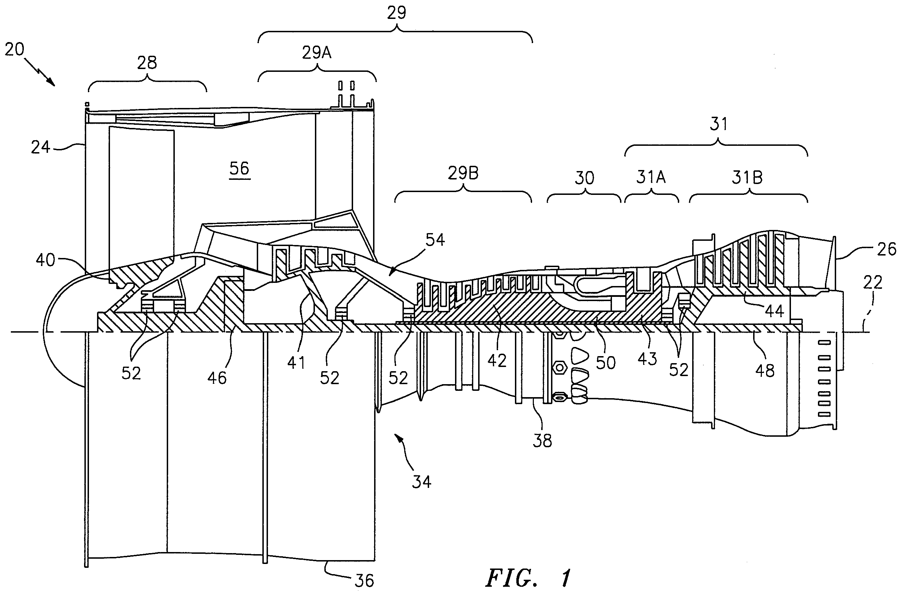

FIG. 1 is a side cutaway illustration of a geared turbine engine 20 that extends along an axis 22 between an upstream airflow inlet 24 and a downstream airflow exhaust 26. The engine 20 includes a fan section 28, a compressor section 29, a combustor section 30 and a turbine section 31. The compressor section 29 includes a low pressure compressor (LPC) section 29A and a high pressure compressor (HPC) section 29B. The turbine section 31 includes a high pressure turbine (HPT) section 31A and a low pressure turbine (LPT) section 31B. The engine sections 28-31 are arranged sequentially along the axis 22 within an engine housing 34, which includes a first engine case 36 (e.g., a fan nacelle) and a second engine case 38 (e.g., a core nacelle).

Each of the engine sections 28, 29A, 29B, 31A and 31B includes a respective rotor 40-44. Each of the rotors 40-44 includes a plurality of rotor blades arranged circumferentially around and connected to (e.g., formed integral with or attached to) one or more respective rotor disks. The fan rotor 40 is connected to a gear train 46; e.g., an epicyclic gear train. The gear train 46 and the LPC rotor 41 are connected to and driven by the LPT rotor 44 through a low speed shaft 48. The HPC rotor 42 is connected to and driven by the HPT rotor 43 through a high speed shaft 50. The low and high speed shafts 48 and 50 are rotatably supported by a plurality of bearings 52. Each of the bearings 52 is connected to the second engine case 38 by at least one stator such as, for example, an annular support strut.

Air enters the engine 20 through the airflow inlet 24, and is directed through the fan section 28 and into an annular core gas path 54 and an annular bypass gas path 56. The air within the core gas path 54 may be referred to as "core air". The air within the bypass gas path 56 may be referred to as "bypass air". The core air is directed through the engine sections 29-31 and exits the engine 20 through the airflow exhaust 26. Within the combustor section 30, fuel is injected into and mixed with the core air and ignited to provide forward engine thrust. The bypass air is directed through the bypass gas path 56 and out of the engine 20 to provide additional forward engine thrust, or reverse thrust via a thrust reverser.

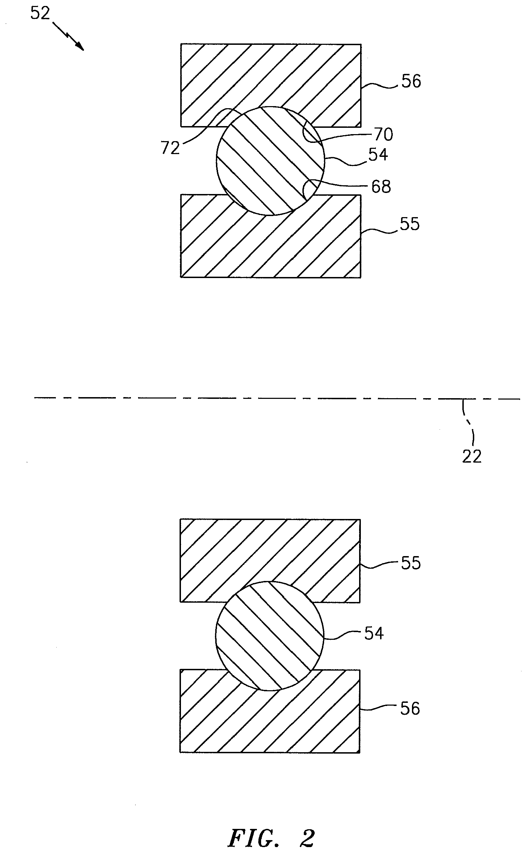

FIG. 2 is a side sectional illustration of one of the bearings 52 of FIG. 1. This bearing 52 is configured as a ball bearing. The bearing 52, however, may alternatively be configured as a cylindrical rolling bearing, a tapered rolling bearing, a spherical rolling bearing, a needle rolling bearing, or any other type of rolling element bearing. The bearing 52 includes one or more rolling elements 54, a bearing inner ring 55 and a bearing outer ring 56. The rolling elements 54 are arranged circumferentially around the axis 22, and radially between the inner ring 55 and the outer ring 56.

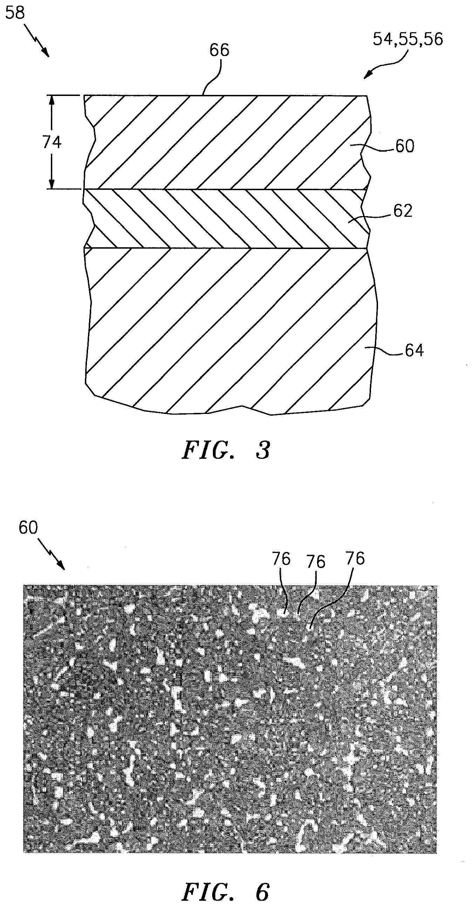

One or more of components 58 (see FIG. 3) of the bearing 52, such as one or more of the rolling elements 54, the inner ring 55 and the outer ring 56, are each formed from processed martensitic stainless steel. The processed martensitic stainless steel may be composed of iron (Fe), chromium (Cr), carbon (C) as well as one or more of the following: nitrogen (N), cobalt (Co), vanadium (V), molybdenum (Mo), nickel (Ni), manganese (Mn), silicon (Si), tungsten (W), titanium (Ti), and/or niobium (Nb). The present invention, however, is not limited to the foregoing material composition.

FIG. 3 illustrates an enlarged portion of one of the bearing components 58; e.g., one of the rolling elements 54, the inner ring 55 or the outer ring 56. The processed martensitic stainless steel of this component is configured with a hardened case 60, a transition region 62 and a core 64.

The hardened case 60 at least partially surrounds (e.g., covers or encapsulates) the transition region 62 and the core 64. The hardened case 60 defines an exterior surface 66 of the bearing component 58 such as, for example, a raceway surface 68, 70 of one of the rings 55, 56 or a contact surface 72 of one of the rolling elements 54 (see FIG. 2). The hardened case 60 extends from the exterior surface 66 towards the core 64 and to the transition region 62, thereby defining a hardened case depth 74. This depth 74 may be substantially equal to or greater than about two times (2x) a depth of a maximum von-Mises shear stress (σ). The depth 74, for example, may be substantially equal to or greater than about one one hundredths (0.01) of an inch (e.g., -0.0254 centimeters) for a relatively lightly loaded bearing; e.g., a bearing having a mean stress between about 100 ksi and about 150 ksi. In another example, the depth 74 may be substantially equal to or greater than about six one hundredths (0.06) of an inch (e.g., ∼0. 1524 centimeters) for a relatively heavily loaded bearing; e.g., a bearing having a mean stress between about 200 ksi and about 300 ksi.

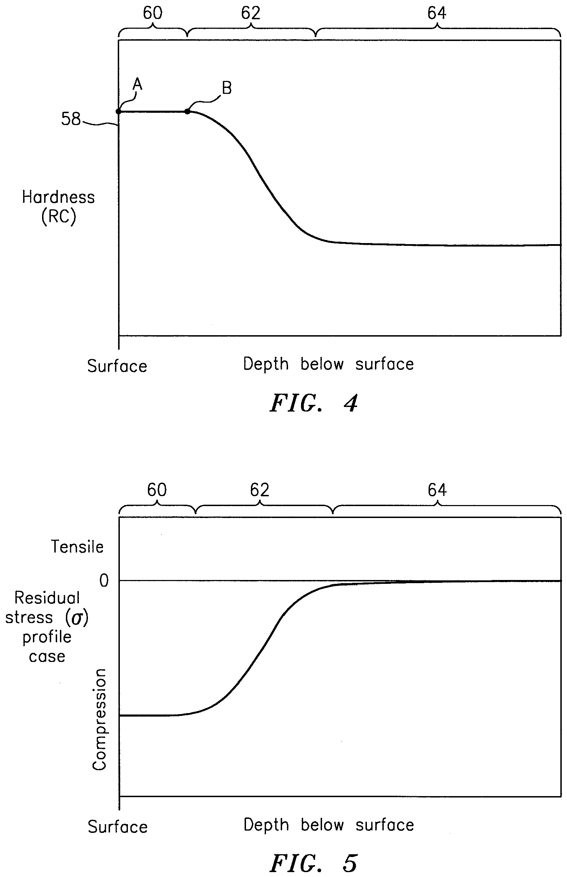

Referring to FIG. 4, the hardened case 60 has a hardness that is substantially equal to or greater than about fifty eight on the Rockwell scale (58 RC). Alternatively, the hardness may be substantially equal to or greater than about sixty four on the Rockwell scale (64 RC) to further increase the load bearing capability of the bearing component 58. The hardness of the hardened case 60 may be substantially uniform as the case 60 extends from the exterior surface 66 to the transition region 62. For example, the hardness of the hardened case 60 at (e.g., on, adjacent or proximate) the exterior surface 66 (point A) may be substantially equal to the hardness of the hardened case 60 at an intersection of the case 60 and the transition region 62 (point B).

Referring to FIG. 5, the hardened case 60 has a residual compressive stress that is substantially equal to or greater than about five thousand pounds per square inch (5 ksi). This may be enabled, for example, by a martensite start transformation temperature of the hardened case 60 being (e.g., at least ten degrees Fahrenheit - 10°F) lower than a martensite start transformation temperature of the unprocessed martensitic stainless steel.

The processed martensitic stainless steel of the hardened case 60 has a substantially uniform grain size that is substantially equal to or finer than ASTM (American Society for Testing and Materials) grain size #7. Alternatively, the grain size may be substantially equal to or finer than ASTM grain size #9; e.g., from about ASTM grain size #9 and to about ASTM grain size #12, or finer. The foregoing relatively fine grain sizes may strengthen the case 60, increase case 60 microstructural uniformity, and/or increase a rolling contact fatigue (RCF) resistance of the case 60. These characteristic(s) may in turn reduce a propensity for a crack to propagate through the case 60 and the bearing component 58. A grain size of ASTM grain size #9 or finer may also provide the case 60 with a relatively high compressive strength and/or a relatively high ductility.

The processed martensitic stainless steel of the hardened case 60 includes between about eight tenths of one percent (0.8%) and about four percent (4%) by weight of the carbon. A volume fraction of the carbon in the hardened case 60 may be substantially equal to or greater than about five percent (5%) by volume. Referring to FIG. 6, the carbon forms molecules 76 within the hardened case 60, i.e. carbo-nitrides, for example with moderate, fine or ultra fine sizes; e.g., particle sizes between about 0.01 to about 100 microns. Examples of a carbide include, but are not limited to, M₆C, M₂C, M₂₃C₆ or a combination thereof. "M" represents a metal such as, for example, chromium, molybdenum, nickel, cobalt, titanium or a combination thereof, and "C" represents carbon. The molecules 76 that include carbon, i.e. the carbo-nitrides, are substantially uniformly dispersed within the processed martensitic stainless steel and the hardened case 60. Such a uniform dispersion may increases the strength and ductility of the processed martensitic stainless steel as compared to steel with carbides (e.g., MC, or M₇C₃) formed around its grain boundaries during carburization.

The processed martensitic stainless steel of the hardened case 60 includes approximately six percent (6%) by weight or more of the chromium. For example, the processed martensitic stainless steel of the hardened case 60 may include between about six percent (6%) and about eight percent (8%) by weight chromium to balance corrosion resistance with tribological performance. With such chromium content, the hardened case 60 may favorably react with an anti-wear oil additive (e.g., Tri-cresyl phosphate (TCP)) to form a high compressive stress, low shear stress tribological film. Such a tribological film may prevent metal-metal contact under boundary lubrication conditions and improve resistance to adhesive wear.

The processed martensitic stainless steel of the hardened case 60 may also include between about two percent (2%) and about twenty percent (20%) by volume retained austenite. The processed martensitic stainless steel of the hardened case 60 may also or alternatively include molybdenum, nitrogen and/or various other materials to increase environmental resistance of the case 60.

Referring to FIG. 3, the transition region 62 at least partially surrounds (e.g., covers or encapsulates) the core 64. The transition region 62 extends between the hardened case 60 and the core 64. Referring to FIG. 4, the transition region 62 has a hardness that gradually transitions down from the hardness of the hardened case 60 to that of the core 64. Referring to FIG. 5, the transition region 62 has a residual compressive stress that gradually transitions from the stress of the hardened case 60 down to that of the core 64.

Referring to FIG. 4, the core 64 has a substantially uniform hardness that is less than that of the hardened case 60. Referring to FIG. 5, the core 64 may have substantially little or zero residual compressive stress. The core 64 may have a fracture toughness that is substantially equal to or greater than approximately twenty five thousand pounds per square inch square root inch (25 ksi √in). The processed martensitic stainless steel of the core 64 includes approximately eight percent (8%) by weight or more of the chromium; e.g., between 12% and 18% by weight of the chromium.

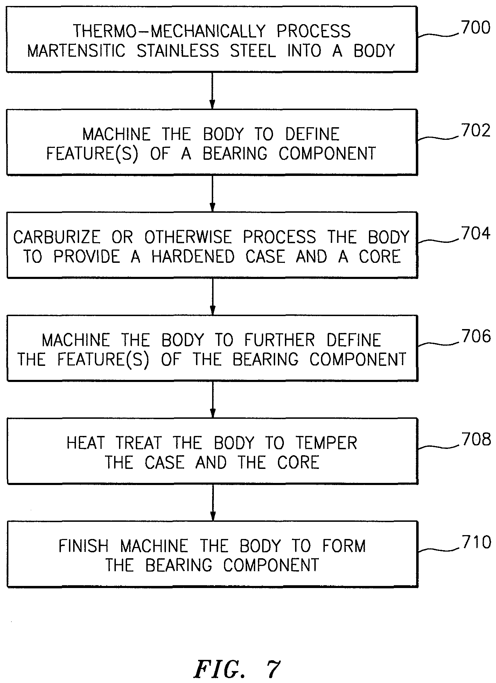

FIG. 7 is a flow diagram of a process for forming a component using unprocessed martensitic stainless steel. For ease of description, this process is described below for forming the bearing component 58 of FIG. 3. However, the present process may alternatively be performed to form various components of a turbine engine other than the bearing component 58 such as, for example, a gear, a shaft, a bearing support, a ball screw, etc. In addition, the present method may be performed to form components other than those included in a turbine engine.

The term "unprocessed" is used to indicate the martensitic stainless steel has not yet undergone the process of FIG. 7. However, the unprocessed martensitic stainless steel may or may not have been pre-processed with one or more other processes.

The unprocessed martensitic stainless steel may have a composition of:
- between about eight percent (8%) and about eighteen percent (18%) by weight chromium;
- up to about sixteen percent (16%) by weight cobalt;
- up to about five percent (5%) by weight vanadium;
- up to about eight percent (8%) by weight molybdenum;
- up to about eight percent (8%) by weight nickel;
- up to about four percent (4%) by weight manganese;
- up to about two percent (2%) by weight silicon;
- up to about six percent (6%) by weight tungsten;
- up to about two percent (2%) by weight titanium;
- up to about four percent (4%) by weight niobium; and
- the balance iron.
An example of such an unprocessed martensitic stainless steel is PYROWEAR® 675 stainless steel (manufactured by Carpenter Technology Corp. of East Hartford, Connecticut, United States), which has a composition of: 13% wt Cr; 5.4% wt Co; 1.8% wt Mo; 2.6% wt Mn; 0.6% wt V; 0.4% wt Si; 0.07% wt C; and balance Fe. The present invention, however, is not limited to any particular unprocessed martensitic stainless steels.

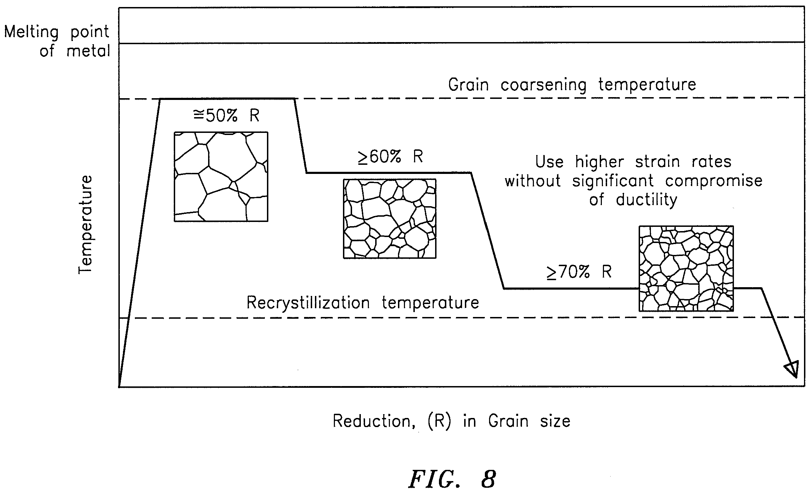

In step 700, the unprocessed martensitic stainless steel is thermo-mechanically processed into a body with a shape and size that generally corresponds to that of the bearing component 58. Bar stock of the unprocessed martensitic stainless steel, for example, may be forged and/or rolled at one or more elevated temperatures. During this forging, a grain size of the stainless steel may be reduced from a relatively coarse grain to a relatively fine grain of ASTM grain size #7 or finer by reducing temperature of the steel according to a stepped temperature schedule as illustrated in FIG. 8. This relatively fine grain size provides the stainless steel with a relatively high grain boundary area per unit volume.

In step 702, the body is rough machined to define one or more features (e.g., surfaces, holes, channels, etc.) of the bearing component 58 into the body.

In step 704, the body is carbonitrided to provide a hardened case around a core. For example, a predetermined amount of carbon (i.e., between 0.8 and 4 % wt) is diffused into the body using, for example, a vacuum carburization, plasma-assisted carburization or gas carburization. The carbon may rapidly diffuse into the stainless steel as a result of the relatively high grain boundary area per unit volume, which promotes substantially uniform diffusion of the carbon into the stainless steel. The diffused carbon may form carbo-nitride molecules with other materials within the stainless steel such as the chromium and/or molybdenum, thereby defining the case. These carbo-nitride molecules are substantially uniformly dispersed within the case as a result of the substantially uniform diffusion of the carbon into the stainless steel. In step 706, the body is machined to further define one or more features of the bearing component 58 into the body.

In step 708, the body is heat treated using an interrupted quenching and tempering process. For example, the body is quenched from an austenitizing temperature to a temperature between a martensite finish transformation (Mf) temperature of the core and a martensite start transformation (Ms) temperature of the case in order to transform the steel of the core into untempered martensite. The body may be reheated to an elevated temperature to provide the core with a predetermined hardness and fracture toughness; e.g., to temper the core. The body may be quenched to room temperature to transform the steel of the case into untempered martensite. The body is subsequently tempered in cryogenic cycles to provide the case with a predetermined hardness and to lower the retained austenite in the case. Notably, by interrupting the tempering prior to transforming the steel of the case into untempered martensite as described above, the core may be may be tempered to provide a relatively high fracture toughness without affecting the hardness of the case.

In some embodiments, the case may be high temperature tempered. The case, for example, may be tempered at a temperature between about eight hundred and fifty (850) and about eleven hundred (1100) degrees Fahrenheit (e.g., ∼482-593°C). Such a high temperature temper may provide a relatively low volume fraction of retained austenite within the case; e.g., three (3) to fifteen (15) percent by volume. The high temperature temper may also precipitate M₂₃C₆ in the transformed martensite to a dispersion strengthened condition. The remaining retained austenite may maintain a relatively high strength and a relatively low toughness.

In other embodiments, the case may be low temperature tempered. The case, for example, may be tempered at a temperature between about four hundred (400) and about six hundred and fifty (650) degrees Fahrenheit (e.g., ∼204-343°C). Such a low temperature temper may provide a relatively high volume fraction of retained austenite within the case; e.g., eight (8) to fifteen (15) by volume. The low temperature temper may be performed without carbide precipitation. The low temperature temper may provide a lower hardness than the high temperature temper, but may provide a high level of surface compressive residual stress and corrosion resistance.

In step 710, the body is finished machined to form the bearing component 58.

The bearing 25 and its components may have various configurations and may be formed from various materials other than those described above and illustrated in the drawings. One of the rings 55 and 56, for example, may be formed integral with another component such as, for example, a gear and/or a shaft. The bearing 25 may be configured as a hybrid bearing with case hardened stainless steel rings and ceramic rolling elements. For example, one or more of the rolling elements 54 may each be formed from ceramic such as, for example, silicon nitride (Si₃N₄), or any other material. One or more of the rings 55 and 56 may each be formed from the processed martensitic stainless steel. Alternatively, one or more of the rings 55 and 56 may each be formed from a metal other than the processed martensitic stainless steel such as, for example, AMS 6490 or 6491 steel (e.g., M50 steel, which is available from Carpenter Technology Corp. of Pennsylvania, USA), AMS 6278 steel (e.g., M50NiL steel, which is available from Carpenter Technology Corp.), AMS 5898 steel (e.g., Cronidur® X30 steel, which is available from Energietechnik Essen GmbH of Essen, German), or other similar materials. The present invention therefore is not limited to any particular bearing or bearing component configurations or materials.

The bearing 25 may be included in various turbine engines other than the one described above as well as in other types of rotational equipment. The bearing, for example, may be included in a geared turbine engine where a gear train connects one or more shafts to one or more rotors in a fan section, a compressor section and/or any other engine section. Alternatively, the bearing may be included in a turbine engine configured without a gear train. The bearing may be included in a geared or non-geared turbine engine configured with a single spool, with two spools (e.g., see FIG. 1), or with more than two spools. The turbine engine may be configured as a turbofan engine, a turbojet engine, a propfan engine, or any other type of turbine engine. The present invention therefore is not limited to any particular types or configurations of turbine engines or rotational equipment.

While various embodiments of the present invention have been disclosed, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined within any one of the aspects and remain within the scope of the invention. Accordingly, the present invention is not to be restricted except in light of the attached claims and their equivalents.

## Claims

1. A rolling element bearing (52), comprising:
a plurality of bearing components (58) including one or more rolling elements (54), an inner ring (55) and an outer ring (56);
a first of the bearing components comprising martensitic stainless steel configured with a core (64) and a hardened case (60), wherein the first of the bearing components is one of the one or more rolling elements (54), the inner ring (55) or the outer ring (56);
the martensitic stainless steel of the core including 8-18% by weight chromium; and
the martensitic stainless steel of the hardened case having a grain size that is equal to or finer than ASTM grain size #7, and including 6% by weight or more chromium, and carbon;
wherein molecules that include said carbon are uniformly dispersed within the hardened case; and
wherein the martensitic stainless steel of the hardened case comprises between two and fifteen percent by volume retained austenite and between 0.8 and 4 percent by weight of the carbon,
**characterized in that** the molecules that include carbon are carbonitrides.

2. The bearing of claim 1, wherein the martensitic stainless steel further includes at least one of nitrogen, manganese, nickel, molybdenum, tungsten and silicon.

3. The bearing of claim 1, wherein the hardened case has a depth that extends from a surface of the first of the bearing components towards the core, and the depth is equal to between 0.025 cm (0.01 inches) and 0.15 cm (0.06 inches).

4. The bearing of claim 1, wherein the hardened case has a hardness that is equal to or greater than 58 RC.

5. The bearing of claim 1, wherein the hardened case has a uniform hardness, or wherein the hardened case has a compressive stress that is equal to or greater than 34 MPa (5 ksi).

6. The bearing of claim 1, wherein the core has a fracture toughness that is equal to or greater than 172 MPa (25 ksi square root inch).

7. The bearing of claim 1, wherein the grain size is equal to or finer than ASTM grain size #9.

8. The bearing of claim 1, wherein a volume fraction of the carbo-nitrides within the hardened case is equal to or greater than about 5 percent by volume; or wherein the carbo-nitrides have a particle size between 0.01 microns and 100 microns.

9. The bearing of claim 1 wherein at least one of the rolling elements comprises ceramic.

10. The bearing of claim 1, wherein the martensitic stainless steel includes iron, chromium, cobalt, vanadium, molybdenum, nickel, manganese, silicon and carbon; and the case (60) includes between 0.8 and 4 percent by weight of the carbon.

## Patentansprüche

1. Wälzlagerelement (52), Folgendes umfassend:
eine Vielzahl von Lagerbauteilen (58), die ein oder mehrere Wälzlager (54), einen Innenring (55) und einen Außenring (56) beinhalten;
ein erstes der Lagerbauteile, das martensitischen rostfreien Stahl konfiguriert mit einem Kern (64) und einen gehärteten Mantel (60) umfasst, wobei das erste der Lagerbauteile eines von dem einen oder mehreren Wälzlagern (54), dem Innenring (55) oder dem Außenring (56) ist;
den martensitischen rostfreien Stahl des Kerns, der 8-18 Gew.-% Chrom beinhaltet; und
den martensitischen rostfreien Stahl des gehärteten Mantels, der eine Korngröße aufweist, die gleich oder feiner als die ASTM Korngröße 7 ist und 6 Gew.-% oder mehr Chrom und Kohlenstoff beinhaltet;
wobei Moleküle, die den Kohlenstoff beinhalten, gleichmäßig innerhalb des gehärteten Mantels dispergiert sind; und
wobei der martensitische rostfreie Stahl des gehärteten Mantels zwischen zwei und fünfzehn Volumenprozent Restaustenit und zwischen 0,8 bis 4 Gewichtsprozent Kohlenstoff umfasst, **dadurch gekennzeichnet, dass** die Moleküle, die Kohlenstoff beinhalten, Carbonitride sind.

2. Lager nach Anspruch 1, wobei der martensitische rostfreie Stahl ferner mindestens eines von Stickstoff, Mangan, Nickel, Molybdän, Wolfram und Silicium umfasst.

3. Lager nach Anspruch 1, wobei der gehärtete Mantel eine Tiefe aufweist, die sich von einer Oberfläche des ersten der Lagerbauteile zu dem Kern hin erstreckt und wobei die Tiefe gleich zwischen 0,025 cm (0,01 Inch) und 0,15 cm (0,06 Inch) ist.

4. Lager nach Anspruch 1, wobei der gehärtete Mantel eine Härte aufweist, die gleich oder größer als 58 Rc ist.

5. Lager nach Anspruch 1, wobei der gehärtete Mantel eine gleichmäßige Härte aufweist, oder wobei der gehärtete Mantel eine Druckspannung aufweist, die gleich oder größer 34 MPa (5 ksi) ist.

6. Lager nach Anspruch 1, wobei der Kern eine Bruchzähigkeit aufweist, die gleich oder größer als 172 MPa (25 ksi square root inch) ist.

7. Lager nach Anspruch 1, wobei die Korngröße gleich oder feiner als ASTM Korngröße 9 ist.

8. Lager nach Anspruch 1, wobei ein Volumenanteil der Carbonitride innerhalb des gehärteten Mantels gleich oder größer als etwa 5 Volumenprozent ist; oder wobei die Carbonitride eine Partikelgröße zwischen 0,01 Mikron und 100 Mikron aufweisen.

9. Lager nach Anspruch 1, wobei mindestens eines der Wälzlager Keramik umfasst.

10. Lager nach Anspruch 1, wobei der martensitische rostfreie Stahl Eisen, Chrom, Kobalt, Vanadium, Molybdän, Nickel, Mangan, Silicium und Kohlenstoff beinhaltet; und wobei der Mantel (60) zwischen 0,8 und 4 Gewichtsprozent des Kohlenstoffs beinhaltet.

## Revendications

1. Palier à roulement (52), comprenant :
une pluralité de composants de palier (58) incluant un ou plusieurs éléments roulants (54), une bague intérieure (55) et une bague extérieure (56) ;
un premier des composants de palier constitué d'acier inoxydable martensitique conçu avec un noyau (64) et un logement durci (60), dans lequel le premier des composants de palier est l'un d'un ou plusieurs des éléments roulants (54), la bague intérieure (55) ou la bague extérieure (56) ;
l'acier inoxydable martensitique du noyau incluant 8 à 18 % en poids de chrome ; et
l'acier inoxydable martensitique du logement durci présentant une taille de grain qui est égale à ou plus fine que la taille de grain ASTM n° 7, et incluant 6 % en poids ou plus de chrome, et de carbone ;
dans lequel les molécules qui incluent ledit carbone sont uniformément réparties dans le logement durci ; et
dans lequel l'acier inoxydable martensitique du logement durci comprend entre deux et quinze pour cent en volume d'austénite résiduelle et entre 0,8 et 4 pour cent en poids de carbone,
**caractérisé en ce que** les molécules qui incluent le carbone sont des carbonitrures.

2. Palier de la revendication 1, dans lequel l'acier inoxydable martensitique inclut en outre au moins un élément parmi l'azote, le manganèse, le nickel, le molybdène, le tungstène et le silicium.

3. Palier de la revendication 1, dans lequel le logement durci présente une profondeur qui s'étend depuis une surface du premier des composants de palier vers le noyau, et la profondeur est comprise entre 0,025 cm (0,01 pouce) et 0,15 cm (0,06 pouce).

4. Palier de la revendication 1, dans lequel le logement durci présente une dureté qui est égale à ou supérieure à 58 RC.

5. Palier de la revendication 1, dans lequel le logement durci présente une dureté uniforme, ou dans lequel le logement durci présente une contrainte de compression qui est égale à ou supérieure à 34 MPa (5 ksi).

6. Palier de la revendication 1, dans lequel le noyau présente une ténacité à la rupture qui est égale à ou supérieure à 172 MPa (25 ksi racine carrée pouce).

7. Palier de la revendication 1, dans lequel la taille de grains est égale à ou plus fine que la taille de grain ASTM n° 9.

8. Palier de la revendication 1, dans lequel une fraction volumique des carbonitrures au sein du logement durci est égale à ou supérieure à environ 5 pour cent en volume ; ou dans lequel les carbonitrures présentent une taille de grain comprise entre 0,01 micron et 100 microns.

9. Palier de la revendication 1, dans lequel au moins un des éléments roulants comprend de la céramique.

10. Palier de la revendication 1, dans lequel l'acier inoxydable martensitique inclut du fer, du chrome, du cobalt, du vanadium, du molybdène, du nickel, du manganèse, du silicium et du carbone ; et le logement (60) inclut entre 0,8 et 4 pour cent en poids du carbone.
